# EUROPÄISCHE PATENTSCHRIFT

(11) **EP 0 981 915 B1**
(45) Veröffentlichungstag und Bekanntmachung des Hinweises auf die Patenterteilung: **09.03.2005**
(21) Anmeldenummer: 98933513.8
(22) Anmeldetag: 13.05.1998
(51) Int. Cl.: H04Q 7/24, H04Q 7/38, H04Q 3/00

(54) **VERFAHREN ZUR ERREICHBARKEIT VON TEILNEHMERN IN EINEM FUNKKOMMUNIKATIONSSYSTEM**
METHOD FOR SUBSCRIBER AVAILABILITY IN A RADIO COMMUNICATIONS SYSTEM
PROCEDE POUR L'ACCESSIBILITE D'ABONNES DANS UN SYSTEME DE RADIOCOMMUNICATIONS

(30) Priorität: 14.05.1997 DE 19719955
(43) Veröffentlichungstag der Anmeldung: 01.03.2000
(73) Patentinhaber: T-Mobile Deutschland GmbH, 53227 Bonn (DE)
(72) Erfinder: SÄNGER, Georg, D-53545 Linz (DE)
(74) Vertreter: Riebling, Peter, Dr.-Ing.
(86) Internationale Anmeldenummer: PCT/DE1998/001320
(87) Internationale Veröffentlichungsnummer: WO 1998/052361

(56) Entgegenhaltungen:
- EP-A- 0 431 453
- EP-A- 0 753 976
- US-A- 5 235 631
- US-A- 5 594 777

## Beschreibung

Die vorliegende Erfindung betrifft ein Verfahren zur Erreichbarkeit von Teilnehmern in einem Funkkommunikationssystem.

Erfüllen gewisse Teilnehmer eines Funkkommunikationssystems als Servicegeber bestimmte Serviceleistungen für andere Teilnehmer des Kommunkkationssystems als Servicenehmer, so ist es für die anderen Teilnehmer wünschenswert, diese Servicegeber unter ihnen bekannten, gleichbleibenden Service-Rufnummern zu erreichen. Diese Rufnummern orientieren sich idealerweise nach der Art der angebotenen Serviceleistung und können z.B. einen hierarchischen Aufbau oder Gruppenzuordnungen aufweisen, wenn die Serviceleistungen der verschiedenen Servicegeber ebenfalls solche Gruppierungen aufweisen.

Aus dem Stand der Technik ist hierzu die Druckschrift EP-A-0 431 453 bekannt, die die Zuordnung solcher hierarchischer oder gruppenbezogener Objektbezeichnungen als Rufnummern zu Servicegebern beschreibt. Hierbei wird einem Servicegeber mit individueller Rufnummer auf Anfrage eine Service-Rufnummer temporär zugeteilt, die auf die Art der von Ihm erbrachten Leistung abgestimmt ist.
Aus der Zusammensetzung seiner zugeteilten Rufnummer kann direkt auf die momentan ausgeführte Tätigkeit geschlossen werden.
Nachteilig ist jedoch, daß für den als Servicegeber fungierenden Teilnehmers eine Neuzuordnung von Rufnummern zu seiner gegebenen Teilnehmerumgebungen nötig wird. Hierzu sind aufwendige Verfahrensschritte in Kommunikation mit dem betreffenden Teilnehmer nötig.

Die EP-A-0 753 976 betrifft ein virtuelles privates Netz für Mobilfunkteilnehmer, wobei für ausgewählte Teilnehmer neben dem regulären logischen Teilnehmerdatensatz ein zweiter logischer Teilnehmerdatensatz angelegt werden kann, um sie als Teilnehmer eines virtuellen privaten Netzes zu registrieren. Über diesen zweiten logischen Datensatz ist dem Teilnehmer eine Kommunikation innerhalb des virtuellen privaten Netzes unter besonderen Konditionen möglich.
Jedem Teilnehmer des virtuellen privaten Netzes ist somit ein individueller zweiter Datensatz, d.h. eine eigene zweite Teilnehmeridentität zugeordnet, wobei diese Teitnehmeridentität für jeden neuen Teilnehmer des virtuellen privaten Netzes neu eingerichtet werden muss und nicht übertragbar ist. Für wechselnde Teilnehmer, die unter ein und derselben Identität erreichbar sein sollen, ist das hier beschriebene Verfahren nicht geeignet.

Aufgabe der vorliegenden Erfindung ist es somit, ein Verfahren bereitzustellen, das eine einfache Erreichbarkeit von Servicegeber-Teilnehmern garantiert. Diese Aufgabe wird gelöst durch die Merkmale des vorliegenden Anspruches 1.

Virtuelle Kommuniaktionsnetze (Virtual Private Network VPN) sind aus dem Stand der Technik hinreichend bekannt. Sie simulieren ein eigenes Kommunikationsnetz, das sich tatsächlich innerhalb eines realen Kommunikationsnetzes befindet. Durch Anwendung dieser Technologie können Service-Identitäten als Teitnehmerumgebungen in diesem virtuellen Kokmmunikationsnetz mit den entsprechenden Teilnehmerdatensätzen bereitgestellt werden. Benötigt nun ein Teilnehmer als Servicegeber eine temporäre Objektkennung, so genügt es, ihm die bereits vorgegebene Teilnehmerumgebung mit deren Datensätzen zuzuordnen. Eine Neuorganisation seiner eigenen Teilnehmerumgebung, z.B. durch eine Zuordnung einer oder mehrerer neuer Rufnummern, ist somit entbehrlich. Dabei sollte eine Berechtigungsprüfung der Teilnehmer durchgeführt werden und eine Zuordnung der Teilnehmerdatensätze erst nach positivem Prüfungsergebnis erfolgen, um sicherzustellen, daß die eventuell mit besonderen Privilegien ausgestatteten Teilnehmerumgebungen nur von berechtigten Personen genutzt werden können. Hierzu können automatische Verfahren, z.B. zur Erkennung von individuellen Teilnehmerkennungen des betreffenden Teilnehmers, oder teilnehmerseitige Verfahren wie die Eingabe von Paßwörtern vorgesehen werden.

Idealerweise wird die Verwaltung von Rufen zu den Teilnehmerdatensätzen des virtuellen Kommunikationsnetzes, d.h. insbesondere die Vermittlung und Weiterleitung von ankommenden und abgehenden Rufen, durch die Funktionalitäten ein intelligentes Netzwerkes realisiert.

Vorzugsweise besitzt ein Teilnehmer, dem eine Objektkennung zugeteilt wurde, gleichzeitig eine temporäre objektbezogene und eine permanente individuelle Teilnehmerumgebung. Somit ist er sowohl als Teilnehmer des virtuellen Kommunikationsnetzes als auch als weiterhin unter seiner individuellen Teilnehmernummer erreichbar. Es kann für ihn somit ein Maximum an Erreichbarkeit garantiert werden. Sollte ein Ruf für eine Teilnehmerumgebung des Teilnehmers ankommen, während dieser gerade unter einer anderen Umgebung ein Gespräch führt, so kann der zweite Ruf z.B. auf einen Sprachspeicher umgeleitet werden, oder als Anfrage während der Gesprächs durchgestellt werden, so daß der Teilnehmer abwechselnd mit den beiden Teilnehmern sprechen kann. Der Teilnehmer ist somit ständig unter denjenigen Rufnummern erreichbar, die der individuellen bzw. den temporären Teifnehmerumgebungen entsprechen, welche dem Teilnehmer aktuell zugeordnet sind.

Eine spezielle Ausgestaltung der Erfindung wird im nachfolgenden Beispiel anhand eines Mobilkommunikationssystems nach dem GSM-Standard näher erläutert.

In GSM Mobilfunknetzen ist ein Teilnehmer unter der ihm bzw. seiner Teilnehmerumgebung eindeutig zugeordneten Rufnummer erreichbar, sofern er die ihm und der Rufnummer zugeordnete SIM-Karte in ein aktives GSM-Gerät plaziert hat ('subscriber mobility') .

Die Erfindung bietet die Möglichkeit eines 'server mobility', d.h. einer servicebezogengen Erreichbarkeit. Mit 'server mobility' soll nun bezeichnet werden, wenn ein 'Servicenehmer' einen 'Servicegeber' unter einer 'Servicenummer' und unter gewissen, im weiteren zu definierenden Randbedingungen erreicht werden kann.

Eine Anwendungsmöglichkeit bietet sich z.B. für Zugbegleiter von Bahnunternehmen. Servicegeber ist das Zugbegleitpersonal. Jeder Servicegeber verfügt über eine GSM-Teilnehmerumgebung mit einer GSM-Rufnummer MSISDN, die ihm via SIM-Chipkarte individuell zugeordnet ist. Diese sind den Servicenehmern nicht bekannt. Jeder Zugbegleiter verfügt somit über eine ihm persönlich oder einem Dienststellenpool zugeordnete GSM SIM-Karte. Servicenehmer sind Festnetzteilnehmer oder mobile Teilnehmer.

Servicenummern sind wählbare Rufnummern gültig innerhalb eines VPN. Sie sind parametrisiert, d.h. sie zerfallen in Nummernblöcke mit jeweils bestimmter Bedeutung für den Anwender. Es gibt i.a sehr viele Ziffernkombinationen auf die ein Anwender als Servicenummer zugreifen kann, z.B. mehr als tausend. Die Servicenummern bestehen beispielsweise jeweils aus einer
- Funktionskennziffer (Zugführer, Zugschaffner, Reinigungspersonal, Zuglautsprecher!,...)
- Zugnummer (5-stellig)

Das Zugbegleitpersonal ist unter der Servicenummer, mit Bestandteil Zugnummer, zu erreichen, solange es den Zug auf seinem Zuglauf begleitet. Bei Personalwechsel ist das neue, aktuelle Personal unter denselben Nummern wie zuvor zu erreichen. Diese Umbuchung kann spontan, zu jeder Zeit, an jedem Ort erfolgen. Den Servicenehmern sind ausschließlich die Servicenummern bekannt.

Eine Zuordnung Servicenummer zu Servicegeber, d.h zu dessen GSM Adressen IMSI, MSISDN, beantragt der Servicegeber über sein Endgerät. Der Antrag kann zu jeder Zeit an jedem Ort erfolgen. Die Servicenummer kann der Servicegeber als Bestandteil des Antrags bestimmen, sie kann jedoch auch vordefiniert sein.

Hinter jeder Servicenummer verbirgt sich zu einem Zeitpunkt in der Regel höchstens ein Servicegeber. Es können jedoch sinnvollerweise auch Gruppenrufnummern vorgesehen werden. Eine Servicenummer kann auch unbesetzt bleiben. Eine Servicenummer wird erst dann einem Servicegeber tatsächlich zugeordnet, wenn eine etwaige vorher bestehende Zuordnung dieser Servicenummer zu einem anderen Servicegeber vorher aufgelöst wurde. Die Zuordnung einer Servicenummer zu einem Servicegeber darf bevorzugt nur von diesem selbst oder einer Netzkomponente mit Sonderberechtigung aufgelöst werden.

Jeder Servicenummer ist ein Parameter 'frei' bzw. 'belegt' zuzuordnen. Wenn eine Zuordnung Servicenummer zu Servicegeber existiert, so ist die Servicenummer 'belegt', ansonsten ist sie 'frei'. Einem Antrag auf eine Servicenummer wird nur dann stattgegeben, wenn die Servicenummer 'frei' ist. Damit läßt sich ein unzulässiges Überschreiben einer Zuordnung verhindert. Es kann auch verhindert werden, daß eine Zuordnung unzulässig bestehen bleibt. Dazu wird folgendes Verfahren vorgeschlagen, das sowohl unzulässiges Überschreiben als auch die unzulässige Blockierung einer Servicenummer mit großer Wahrscheinlichkeit verhindert:

Der Servicegeber, der eine Zuordnung beantragt, muß dazu eine Berechtigung. aufweisen. Prozeduren hierzu sind nachfolgend beschrieben. Der Servicegeber beantragt die Zuordnung 'Servicenummer zu seiner SIM:MSISDN' durch geeignete Eingabe an seinem Endgerät. Um die Wahrscheinlichkeit einer Fehleingabe zu reduzieren, kann vorgesehen werden, die Nummer zweimal einzugeben, ähnlich einer PIN Änderung.
Das System führt die beantragte neue Zuordnung durch, wenn die Servicenummer zum Zeitpunkt der Anfrage 'frei' ist und quittiert eine durchgeführte Zuordnung. Vorzugsweise ist die aktuelle Servicenummer im Endgerät für die Dauer der Zuordnung anzuzeigen.

Die Zuordnung Servicenummer zu Servicegeber kann vom aktuellen Servicegeber durch Eingabe an seinem Endgerät aufgelöst werden. Eventuell ist es sinnvoll zu vereinbaren, daß explizites Ausbuchen bzw. Ausschalten des Endgerätes ebenfalls zum Löschen der Zuordnung führt.

Ein zweiter, neuer Servicegeber, der die Servicenummer von einem (alten) Servicegeber übernehmen will, kann die Freigabe der Servicenummer, sofern blokkiert, durch Anwahl der Servicenummer und (verbale) Aufforderung des alten Servicegeber die Zuordnung zu löschen, erreichen.

In dem Falle, wenn eine Servicenummer unzulässig nicht frei gegeben ist und die (dezentrale) Anforderung auf Freigabe, wie gerade beschrieben, mißlingt, ist der Eingriff einer dritten Stelle notwendig. Dieser Eingriff ist vom neuen Servicegeber zu beantragen. Er kann auch automatisch initiiert werden, sobald ein Zuordnungsversuch einer Servicenummer fehlschlägt, z.B. in Form einer netzseitigen Überprüfung der bestehenden Zuordnung und gegebenenfalls deren Aufhebung. Diese 'dritte Stelle' wird in folgenden 'Clearing Stelle' genannt.

Clearing Stellen können als entsprechende Einrichtungen des Kommunikationsnetzes, aber auch als Festnetz- oder GSM-Teilnehmer vorgesehen sein. Sie können die Funktionen eines Servicegeber haben oder auch nicht. Clearing Stellen sind dadurch gekennzeichnet, daß sie an der Löschung von bestehenden Zuordnungen Servicegeber zu Servicenummer mitarbeiten ohne daß ihnen selbst die Servicenummer zugeordnet war. Die dazu notwendigen Berechtigungen sind nachfolgend beschrieben. Prinzipiell werden zwei Konzepte unterschieden:
- Clearing Stellen sind alleine und spontan, d.h. auch ohne Aufforderung durch einen Servicegeber, in der Lage jedwede Zuordnung Servicenummer zu Servicegeber zu löschen. In dieser Ausprägung werden Clearing Stellen vorzugsweise zentral und in geringer Anzahl eingerichtet. Der blockierte Servicegeber kann über sein Endgerät eine Verbindung zur Clearing Stelle aufbauen.
- Eine Clearing Stelle kann nur im Zusammenwirken mit dem blockierten Servicegeber eine Zuordnung lösen. Das System löst z.B. dann eine Zuordnung Servicenummer zu Servicegeber, wenn zwei Servicegeber unabhängig voneinander und nicht identisch mit dem zugeordneten Servicegeber die Löschung beantragen. Das System muß den Zusammenhang zweier Löschanträge erkennen und das Eintreffen der Anträge zeitlich überwachen. Wenn erforderlich kann das System dahingehend unterstützt werden, daß die zwei Servicegeber in ihren Anträgen aufeinander verweisen, indem sie als Passwort oder als Teil des Passworts eine dem System bekannte, dem jeweils anderen zugeordnete Identität, eingeben.
Dies kann z.B. ein Teil der GSM:MSISDN des jeweils mitarbeitenden Partners sein.
In dieser Ausprägung sind Clearing Stellen bevorzugt dezentral und in großer Zahl eingerichtet. Jeder Servicegeber kann dabei Clearing Stelle für einen anderen, blockierten Servicegeber sein. Blockierter Servicegeber und Clearing Stelle befinden sich in der Regel am selben Ort.

Die Auswahl einer der Alternativen hängt von weiteren wirtschaftlichen und betrieblichen Randbedingungen ab, die zu erfüllen sind. Im Beispiel kann die Einbeziehung eines weiteren Bahnhofsbeamten bei der Zugnummerzuordnung als 'Clearing-Stelle' ausreichend sein um eine zufriedenstellende Servicequalität zu erreichen.

Hinter einer Servicenummer verbirgt sich eine komplette Teitnehmerumgebung, d.h. eine Servicenummer wirkt wie ein individueller GSM-Teilnehmer, dem zwar keine GSM:SIM-Karte ausgehändigt wird, dem aber sonst alle Subskriptionsmerkmale eines GSM- oder IN-Teilnehmers zukommen.
Der Servicegeber ist also GSM-Teilnehmer und die Servicenummer ein virtueller VPN-Teilnehmer, d.h. es handelt sich um zwei unabhängige und grundverschiedene Teilnehmerverhältnisse. Damit beutet 'server-mobility', daß ein öffentlicher Teilnehmer zeitweise und auf eigene Initiative Teilnehmer in einem VPN werden kann und zwar idealerweise in der Form « sowohl-als-auch ». Alternativ wäre jedoch auch die Variante « entweder-oder » denkbar, d.h. der Teilnehmer müßte sich entscheiden, ob er als individueller Teilnehmer oder als Teilnehmer des VPN fungieren will.

Beispielsweise bekommt das Zugbegleitpersonal ein Endgerät mit individueller SIM-Karte zur jeweils persönlichen Verfügung, mit dem Vorteil, daß das Personal motiviert ist sich um die Geräte zu kümmern, kann sich aber im Dienst in das entsprechende VPN mit den notwendigen Berechtigungen einbuchen .

Die Zuordnung sowie die Löschung von Zuordnungen von Servicenummern zu Servicegeber, identifiziert durch GSM:MSISDN, erfolgt nur nach Erfüllung einer durch das System vorgenommenen Berechtigungsüberprüfung. Verschiedene Klassen von Berechtigungen können unterschieden werden:

Servicegeberberechtigung über Subskription:
Den individuellen GSM-Subskriptionsdatensätzen der Servicegeber werden die Servicenummern, die er jeweils annehmen bzw. abgeben darf, eventuell blockweise, zugeordnet. Die Überprüfung erfolgt im Standard GSM Netz beim Aufruf der entsprechenden Funktion durch das Endgerät.

Servicenummerberechtigung über Einrichtung:
Den Servicenummern werden die GSM:MSISDN zugeordnet, die berechtigt sind, diese anzunehmen oder abzugeben. Die Berechtigungsüberprüfung erfolgt bevorzugt über die Ermittlung bzw. Anzeige von Teilnehmeridentifikationsdaten wie der Rufnummer des anrufenden Servicegebers, der eine Servicenummer anfordert. Dazu ist in GSM die Funktionalität CLIP vorgesehen. Die Rufnummer kann dann mit einer Liste der berechtigten Rufnummern von Servicegebern verglichen werden.

Passwortberechtigung (als Servicenummernberechtigung) :
Es wird ein Passwort, bei verschiedenen, unterschiedlich zu handhabenden Funktionen auch mehrere Passwörter, eingerichtet, die für alle Servicenummern, oder auch für gewisse Servicenummerngruppen, Funktionen gestatten. D.H. die Zuordnung des Passwortes werfolgt zu einer oder mehreren Servicenummern. Diese Passwörter werden ausschließlich denjenigen bekanntgemacht, die diese Funktionen auch nutzen dürfen.

Passwortberechtigung (als Servicegeberberechtigung) :
Hier werden den individuellen GSM:MSISDN Identitäten individuelle Passwörter zugeordnet. Diese Passwörter werden denjenigen bekanntgemacht, der die SIM:MSISDN aktuell nutzt. Erst nach Übertragung dieses SIM:MSISDN- individuellen Passworts und nach einer positiven Korrelation mit Teilnehmeridentifikaitonsdaten (in GSM: CLIP-Daten, siehe oben) werden entsprechende Aktionen gestatten.

Passwörter können aus einem 'geheimen' und einem 'öffentlichen' Anteil bestehen. Die Methoden können je nach Sicherheitsanforderung und betrieblicher Praktikabilität alternativ oder kombiniert eingesetzt werden. Antrag auf Zuordnung bzw. Antrag auf Löschung einer Zuordnung werden als zwei Aktionen mit unterschiedlichen Berechtigungen angesehen.

Unter den Servicenummern wird bevorzugt eine Gruppenbildung eingerichtet, so daß für den Fall, daß ein einer Servicenummer zugeordneter Servicegeber nicht erreichbar ist, besetzt ist oder nicht antwortet, nach einem festzusetzenden Auswahlverfahren eine ankommende Transaktion zu einer anderen Servicenummer derselben Gruppe umgeleitet wird.

## Patentansprüche

1. Verfahren zur Erreichbarkeit von Teilnehmern in einem Funkkommunikationssystem, bei dem Teilnehmern eine Objektkennung temporär zugeteilt wird, wobei die temporären Objektkennungen durch Teilnehmerdatensätze gebildet werden, die jeweils eine gesamte Teilnehmerumgebung eines virtuellen Kommunikationsnetzes VPN innerhalb des Funkkommunikationssytems definieren und Teilnehmern des Kommunikationssystems ein oder mehrere solcher Teitnehmerdatensätze zugeordnet werden können,
**dadurch gekennzeichnet,**
**daß** die Teilnehmerdatensätze bereits vorgegebene Teilnehmerumgebungen definieren, die wahlweise jedem berechtigten Teilnehmer frei zugeordnet werden können.

2. Verfahren nach Anspruch 1,
**dadurch gekennzeichnet,**
**daß** die Rufverwaltung betreffend Teilnehmerdatensätze des virtuellen Kommunikationsnetzes durch ein intelligentes Netzwerk erfolgt.

3. Verfahren nach einem der vorhergehenden Ansprüche,
dadurch gekennzeichet,
daß eine Berechtigungsprüfung der Teilnehmer durchgeführt wird und eine Zuordnung der Teilnehmerdatensätze nach positivem Prüfungsergebnis erfolgt.

4. Verfahren nach einem der vorhergehenden Ansprüche,
**dadurch gekennzeichnet,**
**daß** ein Teilnehmer, dem eine Objektkennung zugeteilt wurde, gleichzeitig eine temporäre objektbezogene und eine permanente individuelle Teilnehmerumgebung besitzt.

5. Verfahren nach Anspruch 4,
**dadurch gekennzeichnet,**
**daß** der Teilnehmer ständig unter denjenigen Rufnummern erreichbar gehalten wird, die der individuellen bzw. den temporären Teilnehmerumgebungen entsprechen, welche dem Teilnehmer aktuell zugeordnet sind.

## Claims

1. Method for the accessibility of subscribers in a radio communications system, in which subscribers are temporarily assigned an object code, wherein the temporary object codes are formed by subscriber data records which in each case define a whole subscriber environment of a virtual communications network VPN within the radio communications system and subscribers of the communications system can be assigned one or more such subscriber data records, **characterised in that** the subscriber data records define already predetermined subscriber environments which optionally can be freely assigned to each authorised subscriber.

2. Method according to claim 1, **characterised in that** call management concerning subscriber data records of the virtual communications network is effected by an intelligent network.

3. Method according to one of the preceding claims, **characterised in that** checking of subscribers' authorisation is carried out, and assignment of the subscriber data records is effected according to a positive result of checking.

4. Method according to one of the preceding claims, **characterised in that** a subscriber who has been assigned an object code simultaneously has a temporary object-related subscriber environment and a permanent individual subscriber environment.

5. Method according to claim 4, **characterised in that** the subscriber is kept permanently accessible under those telephone numbers which correspond to the individual or temporary subscriber environments which are currently assigned to the subscriber.

## Revendications

1. Procédé pour l'accessibilité d'abonnés dans un système de radiocommunication, selon lequel une identification d'objet est attribuée temporairement aux abonnés, les identifications d'objet temporaires étant formées par des ensembles de données d'abonnés qui définissent chacun un environnement d'abonné total d'un réseau de communication virtuel VPN à l'intérieur du système de radiocommunication, et un ou plusieurs de ces ensembles de données d'abonnés peuvent être affectés à des abonnés du système de communication,
**caractérisé en ce que** les ensembles de données d'abonnés définissent des environnements d'abonnés déjà prédéfinis qui peuvent être affectés librement, au choix, à chaque abonné autorisé.

2. Procédé selon la revendication 1, **caractérisé en ce que** la gestion des appels concernant les ensembles de données d'abonnés du réseau de communication virtuel se fait grâce à un réseau intelligent.

3. Procédé selon l'une des revendications précédentes, **caractérisé en ce qu'**un contrôle d'autorisation des abonnés est effectué et une affectation des ensembles de données d'abonnés a lieu après un résultat de contrôle positif.

4. Procédé selon l'une des revendications précédentes, **caractérisé en ce qu'**un abonné auquel une identification d'objet a été attribuée possède en même temps un environnement d'abonné temporaire relatif à l'objet et un environnement d'abonné permanent individuel.

5. Procédé selon la revendication 4, **caractérisé en ce que** l'abonné reste toujours accessible avec les numéros d'appel qui correspondent aux environnements d'abonnés individuels ou temporaires affectés actuellement à l'abonné.
